# EUROPEAN PATENT APPLICATION

(11) **EP 3 306 898 A2**
(43) Date of publication of application: **11.04.2018**
(21) Application number: 16806737.9
(22) Date of filing: 01.06.2016
(51) Int. Cl.: H04L 29/08

(54) **INFORMATION PROCESSING METHOD AND DEVICE**

(30) Priority: 08.06.2015 CN 201510309180
(71) Applicant: Alibaba Group Holding Limited, Grand Cayman (KY)
(72) Inventor: YU, Junze, Hangzhou 310099 (CN)
(74) Representative: Conroy, John
(86) International application number: PCT/CN2016/084225
(87) International publication number: WO 2016/197839

(57) **Abstract**

The present invention relates to an information processing method and device. The method includes: judging, by each server in a server group, whether an acquisition request used for acquiring activity information of a target activity account and sent by a terminal is received; when a server receives the acquisition request, judging, by the server, whether a quantity of locally stored activity information of the target activity account is greater than or equal to a target quantity; when the quantity of the locally stored activity information is greater than or equal to the target quantity, locally acquiring the target quantity of activity information and sending the activity information to the terminal; when the quantity of the locally stored activity information is less than the target quantity, selecting a server nearest to the terminal from servers in the server group that have not received the acquisition request; and sending the acquisition request to the selected server. The present invention can enhance a speed of responding to acquisition requests sent by numerous users on the whole, thus improving response efficiency.

## Description

The present application claims priority to Chinese Patent Application No. 2015103091806 filed on June 8, 2015 and entitled "INFORMATION PROCESSING METHOD AND DEVICE", which is incorporated herein by reference in its entirety.

### Technical Field

The present invention relates to the field of Internet technologies, and in particular, to an information processing method and device.

### Background Art

With rapid development of Internet technologies, interaction in a digital electronic manner becomes increasingly popular. During the interaction, numerous users are likely to access a same account simultaneously, such that the accessed account becomes a popular account.

For example, a merchant establishes, in a server, an activity account including multiple pieces of activity information. When needing to acquire activity information of the activity, a user may send a request used for acquiring the activity information of the activity account to the server through a terminal. The server acquires one piece of activity information from the activity account, and then sends the activity information to the terminal.

With distributing activity red envelopes in marketing business as an example, a merchant establishes, in a server, an activity account for distributing red envelopes, wherein the activity account includes 10,000 red envelopes to be distributed, and each user can only acquire one red envelope. When needing to acquire the red envelope in the activity account, a user may send a request used for acquiring the red envelope of the activity account to the server through a terminal. The server acquires one red envelope from the activity account, and then sends the red envelope to the terminal.

However, when numerous users simultaneously send requests for acquiring activity information of the activity account to the server, if the number of the requests received by the server within a unit time period is greater than the number of requests that the server is capable of processing within the unit time period, a speed at which the server responds to requests sent by some users will be reduced, or even the server cannot respond to requests sent by some users, thus lowering response efficiency.

### Summary of the Invention

To solve the problems in the prior art, the present invention provides an information processing method and device.

According to a first aspect of embodiments of the present invention, an information processing method is provided, wherein the method is applied to a server, the server is one in a server group, and each server in the server group is located at a different location and separately stores activity information of a target activity account; and the method includes:
judging whether an acquisition request used for acquiring activity information of the target activity account and sent by a terminal is received, wherein the acquisition request carries location information of the terminal, a target activity identifier of the target activity account, and a target quantity of the activity information to be acquired;
judging, when the acquisition request is received, whether a quantity of locally stored activity information of the target activity account corresponding to the target activity identifier is greater than or equal to the target quantity of the activity information to be acquired by the acquisition request;
locally acquiring the target quantity of activity information when the quantity of the locally stored activity information is greater than or equal to the target quantity of the activity information to be acquired by the acquisition request, and sending the acquired target quantity of activity information to the terminal; and
selecting, according to the location information of the terminal, a server nearest to the terminal from servers in the server group that have not received the acquisition request when the quantity of the locally stored activity information is less than the target quantity of the activity information to be acquired by the acquisition request; and sending the acquisition request to the selected server, such that the selected server performs, according to the acquisition request, the step of judging whether a quantity of locally stored activity information of the target activity account is greater than or equal to the target quantity of the activity information to be acquired by the acquisition request.

The step of selecting, according to the location information of the terminal, a server nearest to the terminal from servers in the server group that have not received the acquisition request includes:
acquiring a locally stored first correspondence between a server identifier, a database identifier, a database table identifier, an activity identifier, and server location information;
acquiring, from the first correspondence, records including server identifiers of all the servers that have not received the acquisition request;
acquiring records including the target activity identifier from the records including the server identifiers of all the servers that have not received the acquisition request;
separately acquiring server location information from each record including the target activity identifier;
selecting location information of the server nearest to the location information of the terminal from the acquired server location information;
determining, from the first correspondence, a record including the location information of the server nearest to the location information of the terminal; and
using a server corresponding to a server identifier in the record including the location information of the server nearest to the location information of the terminal as the server nearest to the terminal.

Further, the method further includes:
establishing a target activity account, wherein the target activity account includes multiple pieces of activity information and a target activity identifier of the target activity account;
acquiring multiple target servers for storing the multiple pieces of activity information, and acquiring location information of each of the target servers;
allocating activity information to each of the target servers according to the quantity of the activity information of the target activity account and the number of the target servers; and
storing, for each of the target servers, the activity information allocated to the target server into a target database table of a target database of the target server; and storing a target server identifier of the target server, a target database identifier of the target database, a target database table identifier of the target database table, the target activity identifier of the target activity account, and the location information of the target server into the locally stored first correspondence between a server identifier, a database identifier, a database table identifier, an activity identifier, and server location information.

The step of acquiring multiple target servers for storing the multiple pieces of activity information includes:
acquiring a locally stored second correspondence between a server identifier, a database identifier, and an identifier of a database table storing no information;
acquiring all server identifiers included in the second correspondence;
performing a deletion operation on identical server identifiers in all the acquired server identifiers, and keeping only one of the identical server identifiers; and
using all servers corresponding to the remaining server identifiers as the target servers.

The step of storing the activity information allocated to the target server into a target database table of a target database in the target server includes:
acquiring a target record including the target server from the second correspondence;
using a database identifier in the target record as a target database identifier, and using a database table identifier in the target record as a target database table identifier; and
storing the activity information allocated to the target server into a target database table of a target database in the target server, wherein the target database is a database corresponding to the target database identifier, and the target database table is a database table corresponding to the target database table identifier.

According to a second aspect of the embodiments of the present invention, an information processing device is provided, wherein the device includes:
a first judging module configured to judge whether an acquisition request used for acquiring activity information of a target activity account and sent by a terminal is received, wherein the acquisition request carries location information of the terminal, a target activity identifier of the target activity account, and a target quantity of the activity information to be acquired;
a second judging module configured to judge, when the acquisition request is received, whether a quantity of locally stored activity information of the target activity account corresponding to the target activity identifier is greater than or equal to the target quantity of the activity information to be acquired by the acquisition request;
a first acquisition module configured to locally acquire the target quantity of activity information when the quantity of the locally stored activity information is greater than or equal to the target quantity of the activity information to be acquired by the acquisition request;
a first sending module configured to send the acquired target quantity of activity information to the terminal;
a selection module configured to select, according to the location information of the terminal, a server nearest to the terminal from servers in the server group that have not received the acquisition request when the quantity of the locally stored activity information is less than the target quantity of the activity information to be acquired by the acquisition request; and
a second sending module configured to send the acquisition request to the selected server, such that the selected server performs, according to the acquisition request, the step of judging whether a quantity of locally stored activity information of the target activity account is greater than or equal to the target quantity of the activity information to be acquired by the acquisition request.

The selection module includes:
a first acquisition unit configured to acquire a locally stored first correspondence between a server identifier, a database identifier, a database table identifier, an activity identifier, and server location information;
a second acquisition unit configured to acquire, from the first correspondence, records including server identifiers of all the servers that have not received the acquisition request;
a third acquisition unit configured to acquire records including the target activity identifier from the records including the server identifiers of all the servers that have not received the acquisition request;
a fourth acquisition unit configured to separately acquire server location information from each record including the target activity identifier;
a selection unit configured to select location information of the server nearest to the location information of the terminal from the acquired server location information;
a first determination unit configured to determine, from the first correspondence, a record including the location information of the server nearest to the location information of the terminal; and
a second determination unit configured to use a server corresponding to the server identifier in the record including the location information of the server nearest to the location information of the terminal as the server nearest to the terminal.

Further, the device further includes:
an establishment module configured to establish a target activity account, wherein the target activity account includes multiple pieces of activity information and a target activity identifier of the target activity account;
a second acquisition module configured to acquire multiple target servers for storing the multiple pieces of activity information, and acquire location information of each of the target servers;
an allocation module configured to allocate activity information to each of the target servers according to the quantity of the activity information of the target activity account and the number of the target servers; and
a first storage module configured to store, for each of the target servers, the activity information allocated to the target server into a target database table of a target database in the target server; and
a second storage module configured to store a target server identifier of the target server, a target database identifier of the target database, a target database table identifier of the target database table, the target activity identifier of the target activity account, and the location information of the target server into the locally stored first correspondence between a server identifier, a database identifier, a database table identifier, an activity identifier, and server location information.

The second acquisition module includes:
a fifth acquisition unit configured to acquire a locally stored second correspondence between a server identifier, a database identifier, and an identifier of a database table storing no information;
a sixth acquisition unit configured to acquire all server identifiers included in the second correspondence;
a deletion unit configured to perform a deletion operation on identical server identifiers in all the acquired server identifiers, and keep only one of the identical server identifiers; and
a third determination unit configured to use all servers corresponding to the remaining server identifiers as the target servers.

The first storage module includes:
a seventh acquisition unit configured to acquire a target record including the target server from the second correspondence;
a fourth determination unit configured to use a database identifier in the target record as a target database identifier, and use a database table identifier in the target record as a target database table identifier; and
a storage unit configured to store the activity information allocated to the target server into the target database table in the target database in the target server, wherein the target database is a database corresponding to the target database identifier, and the target database table is a database table corresponding to the target database table identifier.

The technical solution provided in the embodiments of the present invention may include the following beneficial effects. In the prior art, multiple pieces of activity information of a target activity account are merely stored in one server. When numerous users send acquisition requests for acquiring the activity information of the target activity account to the server simultaneously, the server may receive a large number of acquisition requests within a unit time period. The number of the acquisition requests received by the server within the unit time period is easily greater than the number of acquisition requests that can be processed by the server within the unit time period. As a result, the server can only process some acquisition requests in the received acquisition requests within the unit time period, and other acquisition requests can only be processed later, such that a speed at which the server responds to other acquisition requests is reduced, and response efficiency is lowered.

However, in the drawings of the present invention, when the numerous users send the acquisition requests for acquiring the activity information of the target activity account to the server simultaneously, because the multiple pieces of activity information of the target activity account have been already pre-stored in multiple servers respectively at different locations, the multiple serves may share the acquisition requests sent by the numerous users. In this way, the number of the acquisition requests received by each server within the unit time period may be decreased, such that the number of the acquisition requests received by each server within the unit time period may be less than the number of acquisition requests that can be processed by the server within the unit time period. Therefore, each server may complete processing of all respectively received processing requests within the unit time period, such that the speed of responding to the acquisition requests sent by the numerous users is enhanced on the whole, and response efficiency is improved.

It should be understood that the foregoing general description and following detailed description are merely exemplary and explanatory, and are not intended to limit the present invention.

### Brief Description of the Drawings

The accompanying drawings herein are incorporated into the specification and constitute a part of the specification. They show embodiments consistent with the present invention, and are used together with the specification to explain the principle of the present invention.
FIG. 1 is a flowchart of an information processing method according to an exemplary embodiment;
FIG. 2 is a flowchart of an information processing method according to an exemplary embodiment;
FIG. 3 is a schematic diagram of a scenario according to an exemplary embodiment; and
FIG. 4 is a block diagram of an information processing device according to an exemplary embodiment.

### Detailed Description

Exemplary embodiments will be described in detail herein, and examples thereof are shown in the accompanying drawings. In the following description related to the accompanying drawings, identical numerals in different drawings denote identical or similar elements unless otherwise indicated. The implementations described in the following exemplary embodiments do not represent all embodiments consistent with the present invention. On the contrary, they are merely examples of devices and methods consistent with some aspects of the present invention as detailed in the appended claims.

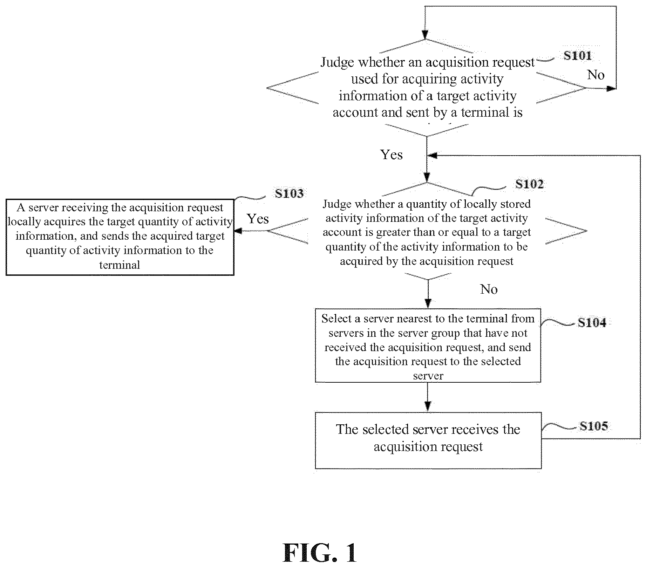

FIG. 1 is a flowchart of an information processing method according to an exemplary embodiment. The method is applied to a server, and the server is one of a server group. Each server in the server group is located at a different location, and respectively stores activity information of a target activity account. As shown in FIG. 1, the method includes the following steps:
In step S101, it is judged whether an acquisition request used for acquiring activity information of the target activity account and sent by a terminal is received.

The acquisition request carries location information of the terminal, a target activity identifier of the target activity account, and a target quantity of the activity information to be acquired.

In step S102, when the acquisition request is received, it is judged whether a quantity of locally stored activity information of the target activity account corresponding to the target activity identifier is greater than or equal to the target quantity of the activity information to be acquired by the acquisition request.

In step S103, when the quantity of the locally stored activity information is greater than or equal to the target quantity of the activity information to be acquired by the acquisition request, a server receiving the acquisition request locally acquires the target quantity of activity information, and sends the acquired target quantity of activity information to the terminal.

In step S104, when the quantity of the locally stored activity information is less than the target quantity of the activity information to be acquired by the acquisition request, a server nearest to the terminal is selected from servers in the server group that have not received the acquisition request, and the acquisition request is sent to the selected server.

In step S105, the selected server receives the acquisition request, and performs step S102 of judging whether a quantity of locally stored activity information of the target activity account is greater than or equal to the target quantity of the activity information to be acquired by the acquisition request.

When the selected server receives the acquisition request, the selected server instantly acts as a server receiving the acquisition request.

In the prior art, multiple pieces of activity information of a target activity account are merely stored in one server. When numerous users send acquisition requests for acquiring the activity information of the target activity account to the server simultaneously, the server may receive a large number of acquisition requests within a unit time period. The number of the acquisition requests received by the server within the unit time period is easily greater than the number of acquisition requests that can be processed by the server within the unit time period. As a result, the server can only process some acquisition requests in the received acquisition requests within the unit time period, and other acquisition requests can only be processed later, such that a speed at which the server responds to other acquisition requests is reduced, and response efficiency is lowered.

However, in the embodiment shown in FIG. 1, when the numerous users send the acquisition requests for acquiring the activity information of the target activity account to the server simultaneously, because multiple pieces of activity information of the target activity account have been already pre-stored in multiple servers respectively at different locations, the multiple serves may share the acquisition requests sent by the numerous users. In this way, the number of the acquisition requests received by each server within the unit time period may be decreased, such that the number of the acquisition requests received by each server within the unit time period may be less than the number of the acquisition requests that can be processed by the server within the unit time period. Thereby, each server may complete processing of all respectively received processing requests within the unit time period, such that the speed of responding to the acquisition requests sent by the numerous users is enhanced on the whole, and response efficiency is improved.

For example, in the prior art, the server can process 200 acquisition requests per second. When 10,000 users located at respective locations all need to acquire activity information of a target activity account, each user sends one acquisition request to the server separately. The server receives the 10,000 acquisition requests within a unit time period, and needs 50 seconds to complete processing of these processing requests, thus prolonging a response time on the whole, and lowering the response efficiency.

However, in the embodiment shown in FIG. 1 of the present invention, 50 servers located at different locations all store activity information of a target activity account, and each server can process 200 acquisition requests per second. When 10,000 users located at different locations all need to acquire the activity information of the target activity account, the 50 servers share the 10,000 acquisition requests sent by the 10,000 users altogether. For example, each server receives 200 acquisition requests. In this way, each server can complete processing of the respectively received processing requests in only one second, thus shortening a response time on the whole, and enhancing the response efficiency.

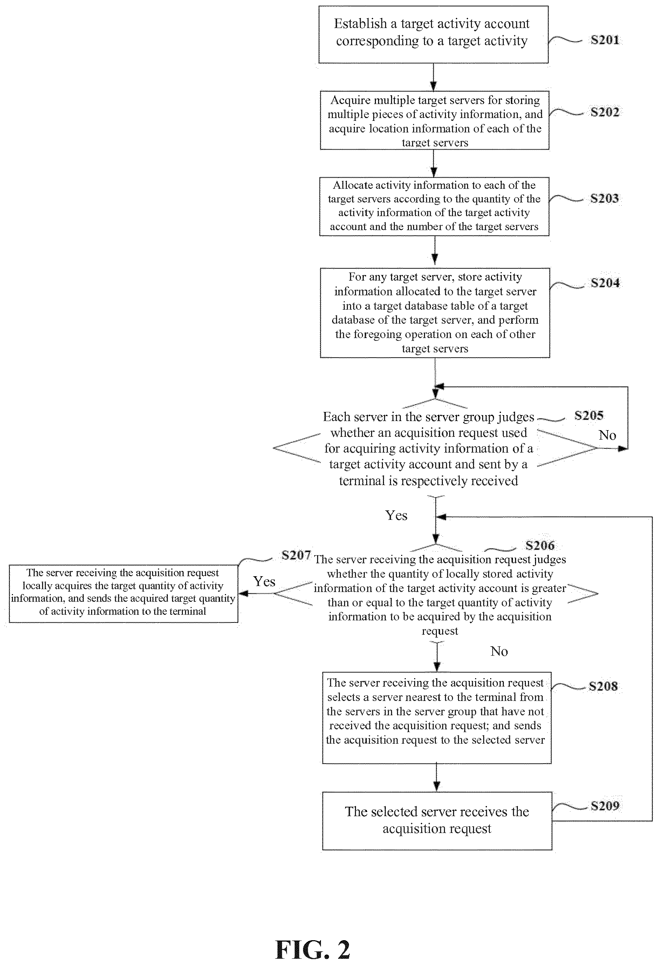

FIG. 2 is a flowchart of an information processing method according to an exemplary embodiment. As shown in FIG. 2, the method includes the following steps:
In step S201, a target activity account corresponding to a target activity is established.

The target activity account includes multiple pieces of activity information and a target activity identifier of the target activity account, wherein the target activity identifier may be a name and/or a number or the like of the target activity.

The target activity may be an activity of snatching a red envelope, an activity of snapping up a commodity, an activity of winning bonus points, or the like.

For example, when the target activity is the activity of snatching a red envelope, each piece of the activity information may be a red envelope containing a certain amount, for example, a five-yuan red envelope or a ten-yuan red envelope. When the target activity is the activity of snapping up a commodity, each piece of the activity information may be the number of commodities limited in purchase, for example, one, two, or so.

In step S202, multiple target servers for storing the multiple pieces of activity information are acquired, and location information of each of the target servers is acquired.

A technical person deploys servers at different locations in advance. These servers may mutually perform data communication, and each includes a database and a database table, for storing data, for example, storing activity information and the like. These servers all collectively correspond to one client terminal. When a user needs to log onto a background server corresponding to the client terminal, the client terminal may select a server nearest to the user for login.

For example, the technical person deploys one server in each city among Beijing, Shanghai, Guangzhou, Xining, Yinchuan, Kunming, and Harbin in advance, and there are seven servers in total. The seven servers collectively correspond to one client terminal "Tmall". A user may install the client terminal "Tmall" on his/her mobile phone. When the user is in Beijing and needs to log into a background server of the client terminal "Tmall", the client terminal "Tmall" may select a server nearest to the mobile phone of the user for login, that is, select a server located in Beijing for login.

Specifically, this step may be implemented by using the following processes, which include:
11). A locally stored second correspondence between a server identifier, a database identifier, and an identifier of a database table storing no information is acquired.
   The deployed servers may mutually perform data communication. Therefore, for any deployed server, the server not only knows a local configuration situation of the server, but also knows configuration situations of all other servers, that is, whether a database table in a database of each server stores data. The server may locally establish, in the server according to the local configuration situation of the server and the configuration situations of all other servers, a second correspondence between a server identifier, a database identifier, and an identifier of a database table storing no information. A database table corresponding to the identifier of the database table storing no information in each record in the second correspondence does not store data.
   The server identifier is a name and/or a number or the like of the server. The database identifier is a name and/or a number or the like of the database. The identifier of the database table is a name and/or a number or the like of the database table.
   However, after a database corresponding to the identifier of the database table storing no information in a record in the second correspondence stores one piece of data, the record is deleted from the second correspondence.
   When data is deleted from a database table to empty the database table, a database table identifier of the database table is acquired, a database identifier of a database to which the database table belongs is acquired, and a server identifier of a server to which the database belongs is acquired. The server identifier, the database identifier, and the database table identifier are stored in the second correspondence.
12). All server identifiers included in the second correspondence are acquired.
   Each record in the second correspondence is acquired, and the server identifier in each record is separately acquired, to acquire all the server identifiers included in the second correspondence.
13). A deletion operation is performed on identical server identifiers in all the acquired server identifiers, and only one of the identical server identifiers is remained.
   Multiple server identifiers in all the acquired server identifiers are probably identical server identifiers. Therefore, the deletion operation needs to be performed on the identical server identifiers, and only one of the identical server identifiers is remained. In the remaining server identifiers, any two server identifiers are different.
14). A server corresponding to each remained server identifier is used as a target server.

In step S203, activity information is allocated to each of the target servers according to the quantity of the activity information of the target activity account and the number of the target servers.

The activity information may be evenly allocated to each of the target servers according to the quantity of the activity information and the number of the target servers. Thus, the quantities of the activity information allocated to any two target servers are the same or have little difference, and it is impossible to produce a huge difference.

For example, supposing that there are 10 target servers and 1000 pieces of activity information, 100 pieces of activity information are allocated to each of the target servers, so as to evenly distribute the activity information to each of the target servers. That is, a same quantity of target information is allocated to any two target servers.

In another example, supposing that there are 10 target servers and 998 pieces of activity information, two target servers are selected from the 10 target servers, 99 pieces of activity information are allocated to each of the two target servers, and 100 pieces of target information are allocated to each of eight other target servers. Thus, the quantities of the target information allocated to any two target servers are the same or have a difference of 1.

Activity degrees of users in different regions may be analyzed according to a historical experience, and activity information of a different quantity is allocated to a server at a different location. More pieces of activity information are allocated to a server deployed in a region where the users have a high activity degree, and few pieces of activity information are allocated to a server deployed in a region where the users have a low activity degree.

For example, it is supposed that there are seven target servers and they are separately located in Beijing, Shanghai, Guangzhou, Xining, Yinchuan, Kunming, and Harbin, wherein users in Beijing, Shanghai, and Guangzhou have a high activity degree, and users in Xining, Yinchuan, Kunming, and Harbin have a low activity degree. More pieces of activity information may be allocated to the servers in Beijing, Shanghai, and Guangzhou, and few pieces of activity information may be allocated to the servers in Xining, Yinchuan, Kunming, and Harbin, thus realizing reasonable allocation of the activity information.

In step S204, for any target server, the activity information allocated to the target server is stored in a target database table of a target database in the target server. The foregoing operation is performed on each of other target servers.

Specifically, for any target server, a target record including a target server identifier of the target server is acquired from the second correspondence. A database identifier in the target record is used as a target database identifier, and a database table identifier in the target record is used as a target database table identifier. The activity information allocated to the target server is stored in the target database table of the target database in the target server, wherein the target database is a database corresponding to the target database identifier, and the target database table is a database table corresponding to the target database table identifier.

Further, the target record is deleted from the second correspondence. A target server identifier of the target server, the target database identifier of the target database, the target database table identifier of the target database table, a target activity identifier of the target activity account, and location information of the target server are stored in a locally stored first correspondence between a server identifier, a database identifier, a database table identifier, an activity identifier, and server location information.

The foregoing operation is performed on each of other target servers.

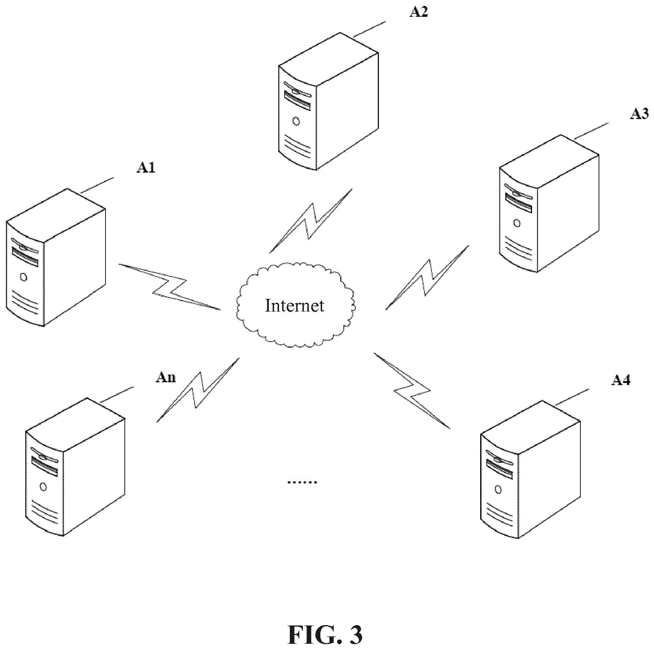

Furthermore, after storage is finished, referring to FIG. 3, all the target servers constitute a server group. Each server in the server group may be connected to the Internet. Thus, the target servers in the server group may communicate with each other. In FIG. 3, A1 to An represent the target servers.

In this way, through a process from steps S201 to S204, multiple pieces of activity information of the target activity account are separately stored in multiple target servers at different locations. At the same time, a target activity is enabled immediately. Afterwards, users may acquire the activity information of the target activity account. When the users need to acquire the activity information of the target activity account, the target server may distribute the activity information to be acquired by the users to the users through the following process from steps S205 to S209.

In step S205, each server in the server group judges whether an acquisition request used for acquiring activity information of a target activity account and sent by a terminal is respectively received.

After the target activity is enabled, each deployed target server performs an operation in step S205. When a target server receives the acquisition request, the target server acquires, through the process from steps S206 to S209, the activity information to be acquired by the acquisition request, and sends the acquired activity information to the terminal.

The acquisition request carries location information of the terminal, a target activity identifier of the target activity account, and the target quantity of activity information to be acquired. Each server in the server group is located at a different location, and separately stores the activity information of the target activity account.

The terminal may be any of a mobile phone, a tablet computer, a notebook computer, and the like used by the user.

The user may view an activity page of the target activity on the terminal, and then send the acquisition request used for acquiring the activity information of the target activity account to the server by clicking or touching. The server receives the acquisition request, and performs processing through the process from steps S206 to S209.

For example, the target activity is distribution of red envelopes, and one piece of activity information is one red envelope. The target activity page displayed on the terminal at least includes a red envelope acquisition button and a red envelope acquisition quantity selection box. The user selects the target quantity of to-be-acquired red envelopes in the red envelope acquisition quantity selection box, and then clicks the acquisition button. After receiving a click operation of clicking the acquisition button by the user, the terminal acquires the target quantity of the to-be-acquired red envelopes that is selected by the user in the red envelope acquisition quantity selection box, generates the acquisition request according to the target quantity, the location information of the terminal, and the target activity identifier of the target activity account, and sends the acquisition request to the server.

A manner of acquiring the location information of the terminal by the terminal may be any manner in the prior art, which is not limited in the present invention.

When one server in the server group receives the acquisition request, in step S206, the server receiving the acquisition request judges whether the quantity of locally stored activity information of the target activity account corresponding to the target activity identifier is greater than or equal to the target quantity of activity information to be acquired by the acquisition request.

Specifically, the database identifier and the database table identifier are acquired from a record including location information of the server nearest to the location information of the terminal. A database table in a database corresponding to the acquired database identifier is determined from the acquired server, where the database table is a database table corresponding to the acquired database table identifier. The quantity of activity information stored in the acquired database table is acquired. It is judged whether the quantity of the activity information stored in the acquired database table is greater than or equal to the quantity of activity information to be acquired by the acquisition request.

When the quantity of the locally stored activity information is greater than or equal to the target quantity of activity information to be acquired by the acquisition request, in step S207, the server receiving the acquisition request locally acquires the target quantity of activity information, and sends the acquired target quantity of activity information to the terminal.

The execution subject in step S207 for "locally acquiring the target quantity of activity information, and sending the acquired target quantity of activity information to the terminal" is the same as the execution subject in step S206 for "judging whether a quantity of locally stored activity information of the target activity account is greater than or equal to the target quantity of activity information to be acquired by the acquisition request".

The target quantity of activity information is acquired from the acquired database table, and is then sent to the terminal. If no activity information is remained in the acquired database table at this time, that is, if the database table is empty at this time, a database table identifier of the acquired database table, a database identifier of a database to which the database table belongs, and a server identifier of a server to which the database having the database table belongs constitute a record. The record is stored in the second correspondence. The record including the acquired database table identifier of the database table is deleted from the first correspondence.

For example, one piece of activity information is one red envelope, the quantity of red envelopes to be acquired by the acquisition request is 5, and the quantity of red envelopes stored in the server receiving the acquisition request is 10. At this time, the quantity 10 of the red envelopes stored in the server receiving the acquisition request is greater than the quantity 5 of the red envelopes to be acquired by the acquisition request. Thus, it is determined that the quantity of the red envelopes stored in the server receiving the acquisition request can satisfy the target quantity of the red envelopes to be acquired by the acquisition request. 5 red envelopes may be selected from the 10 red envelopes stored in the server receiving the acquisition request, and are sent to the terminal. At this time, only 5 stored red envelopes are remained in the server receiving the acquisition request.

When the quantity of the locally stored activity information is less than the target quantity of activity information to be acquired by the acquisition request, in step S208, the server receiving the acquisition request selects, according to the location information of the terminal, a server nearest to the terminal from the servers in the server group that have not received the acquisition request, and sends the acquisition request to the selected server.

In this way, the selected server performs, according to the acquisition request, the step of "judging whether a quantity of locally stored activity information of the target activity account is greater than or equal to the target quantity of activity information to be acquired by the acquisition request" in step S206.

The execution subject in step S208 for "selecting a server nearest to the terminal from the servers in the server group that have not received the acquisition request, and sending the acquisition request to the selected server" is the same as the execution subject in step S206 for "judging whether a quantity of locally stored activity information of the target activity account is greater than or equal to the target quantity of activity information to be acquired by the acquisition request".

The server group includes multiple servers. These servers are separately located at different locations, and all store the activity information of the target activity account.

In the embodiment of the present invention, when the quantity of the locally stored activity information is less than the target quantity of the activity information to be acquired by the acquisition request, it is determined that the quantity of the red envelopes stored in the server receiving the acquisition request cannot satisfy a demand for the target quantity of the red envelopes to be acquired by the acquisition request. In addition, in order to maximally shorten a communication delay caused by the length of a communication link, it is required to select a server nearest to the terminal from the servers in the server group that have not received the acquisition request. Then, the acquisition request is sent to the selected server, such that the selected server receives the acquisition request and then judges whether the quantity of the locally stored activity information of the target activity account is greater than or equal to the target quantity of the activity information to be acquired by the acquisition request. When the quantity of the locally stored activity information is greater than or equal to the target quantity of the activity information to be acquired by the acquisition request, the selected server performs the step of "locally acquiring the target quantity of activity information, and sending the acquired target quantity of activity information to the terminal". When the quantity of the locally stored activity information is less than the target quantity of the activity information to be acquired by the acquisition request, the selected server performs the step of "selecting a server nearest to the terminal from the servers in the server group that have not received the acquisition request, and sending the acquisition request to the selected server".

The step of selecting, according to the location information of the terminal, a server nearest to the terminal from the servers in the server group that have not received the acquisition request may be implemented by using the following process, which includes:
21). A locally stored first correspondence between a server identifier, a database identifier, a database table identifier, an activity identifier, and server location information is acquired.
   Activity identifiers in all records in the first correspondence include a target activity identifier of the target activity account and activity identifiers of other activity accounts.
22). Records including server identifiers of all servers that have not received the acquisition request are acquired from the first correspondence.
23). Records including a target activity identifier are acquired from the first correspondence.
   For any record in the first correspondence, it is judged whether an activity identifier included in the record is a target activity identifier. If the activity identifier included in the record is the target activity identifier, the record is acquired. The foregoing operation is performed on each of other records, so as to acquire all records including the target activity identifier from the first correspondence.
24). Server location information is separately acquired from each record including the target activity identifier.
   For any acquired record including the target activity identifier, the server location information in the record is acquired. The foregoing operation is performed on each of other acquired records including the target activity identifier, so as to separately acquire the server location information in each record including the target activity identifier.
25). Location information of the server nearest to the location information of the terminal is selected from the acquired server location information.
   If location information of only one server is acquired in step 24), the acquired server location information is used as the location information of the server nearest to the location information of the terminal.
   If location information of multiple servers is acquired in step 24), for the acquired location information of any server, a distance between the server location information and the location information of the terminal is calculated. The foregoing operation is performed on the acquired location information of each of other servers. In this way, a distance between the acquired location information of each server and the location information of the terminal can be acquired, and then the location information of the server nearest to the location information of the terminal can be selected according to the calculated distances.
26). A record including the location information of the server nearest to the location information of the terminal is determined from the first correspondence.
   Specifically, in the first correspondence, a first record is acquired, and it is judged whether the record includes the server location information selected in step 25). When the record includes the server location information selected in step 25), the first record is used as the record including the location information of the server nearest to the location information of the terminal. When the record does not include the location information of the server nearest to the location information of the terminal, it is determined that the record is not the record including the location information of the server nearest to the location information of the terminal. Then, a second record is acquired, and the foregoing operation is continuously performed, till an acquired record includes the server location information selected in the step 25). The acquired record is used as the record including the location information of the server nearest to the location information of the terminal.
27). A server corresponding to a server identifier in the record including the location information of the server nearest to the location information of the terminal is used as a server nearest to the terminal.

For example, when one piece of activity information is one red envelope, if the quantity of activity information to be acquired by the acquisition request is 5, the quantity of to-be-acquired red envelopes is 5; supposing that the quantity of the latest acquired red envelopes stored in server is merely 3, the quantity 3 of the latest acquired red envelopes stored in the server is less than the quantity 5 of the red envelopes to be acquired by the acquisition request, and therefore, it is determined that the quantity of the latest acquired red envelopes stored in the server cannot satisfy the demand for the target quantity of the red envelopes to be acquired by the acquisition request. As a result, only 5 red envelopes can be acquired from other servers and returned to the terminal.

In step S209, the selected server receives the acquisition request, and performs the step of judging whether a quantity of locally stored activity information of the target activity account is greater than or equal to the target quantity of activity information to be acquired by the acquisition request in step S206.

When the selected server receives the acquisition request, the selected server instantly acts as the server receiving the acquisition request.

Then, the step of "locally acquiring the target quantity of activity information, and sending the acquired target quantity of activity information to the terminal" in step S207, or the step of "selecting a server nearest to the terminal from the servers in the server group that have not received the acquisition request, and sending the acquisition request to the selected server" in step S208 is performed.

In the prior art, multiple pieces of activity information of a target activity account are merely stored in one server. When numerous users send acquisition requests for acquiring the activity information of the target activity account to the server simultaneously, the server may receive a large number of acquisition requests within a unit time period. The number of the acquisition requests received by the server within the unit time period is easily greater than the number of acquisition requests that can be processed by the server within the unit time period. As a result, the server can only process some acquisition requests in the received acquisition requests within the unit time period, and other acquisition requests can only be processed later, such that a speed at which the server responds to other acquisition requests is reduced, and response efficiency is lowered.

However, in the embodiment shown in FIG. 2, when the numerous users send the acquisition requests for acquiring the activity information of the target activity account to the server simultaneously, because multiple pieces of activity information of the target activity account have been already pre-stored in multiple servers respectively at different locations, the multiple serves may share the acquisition requests sent by the numerous users. In this way, the number of the acquisition requests received by each server within the unit time period may be decreased, such that the number of the acquisition requests received by each server within the unit time period may be less than the number of acquisition requests that can be processed by the server within the unit time period. Therefore, each server may complete processing of all respectively received processing requests within the unit time period, such that the speed of responding to the acquisition requests sent by the numerous users is enhanced on the whole, and response efficiency is improved.

For example, in the prior art, the server can process 200 acquisition requests per second. When 10,000 users located at different locations all need to acquire activity information of a target activity account, each user sends one acquisition request to the server separately. The server receives the 10,000 acquisition requests within a unit time period, and needs 50 seconds to complete processing of these processing requests, thus prolonging a response time on the whole, and lowering the response efficiency.

However, in the embodiment shown in FIG. 2 of the present invention, 50 servers located at different locations all store activity information of a target activity account, and each server can process 200 acquisition requests per second. When 10,000 users located at different locations all need to acquire the activity information of the target activity account, the 50 servers share the 10,000 acquisition requests sent by the 10,000 users altogether. For example, each server receives 200 acquisition requests. In this way, each server only needs one second to complete the processing of the respectively received processing requests, thus shortening a response time on the whole, and enhancing the response efficiency.

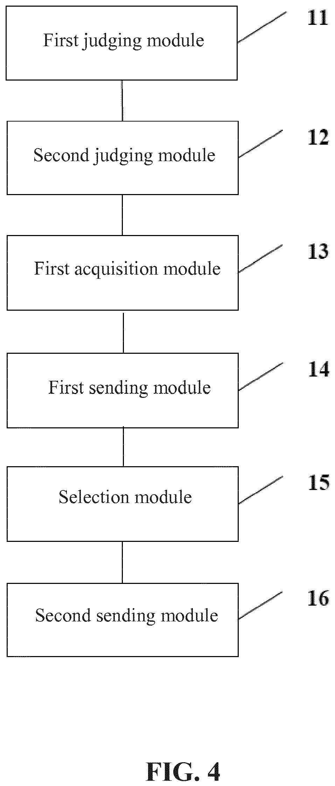

FIG. 4 is a block diagram of an information processing device according to an exemplary embodiment. Referring to FIG. 4, the device includes:
a first judging module 11 configured to judge whether an acquisition request used for acquiring activity information of a target activity account and sent by a terminal is received, wherein the acquisition request carries location information of the terminal, a target activity identifier of the target activity account, and a target quantity of the activity information to be acquired;
a second judging module 12 configured to judge, when the acquisition request is received, whether a quantity of locally stored activity information of the target activity account corresponding to the target activity identifier is greater than or equal to the target quantity of the activity information to be acquired by the acquisition request;
a first acquisition module 13 configured to locally acquire the target quantity of activity information when the quantity of the locally stored activity information is greater than or equal to the target quantity of the activity information to be acquired by the acquisition request;
a first sending module 14 configured to send the acquired target quantity of activity information to the terminal;
a selection module 15 configured to select, according to the location information of the terminal, a server nearest to the terminal from servers in the server group that have not received the acquisition request when the quantity of the locally stored activity information is less than the target quantity of the activity information to be acquired by the acquisition request; and
a second sending module 16 configured to send the acquisition request to the selected server, such that the selected server performs, according to the acquisition request, the step of judging whether a quantity of locally stored activity information of the target activity account is greater than or equal to the target quantity of the activity information to be acquired by the acquisition request.

In the prior art, multiple pieces of activity information of a target activity account are merely stored in one server. When numerous users send acquisition requests for acquiring the activity information of the target activity account to the server simultaneously, the server may receive a large number of acquisition requests within a unit time period. The number of the acquisition requests received by the server within the unit time period is easily greater than the number of acquisition requests that can be processed by the server within the unit time period. As a result, the server can only process some acquisition requests in the received acquisition requests within the unit time period, and other acquisition requests can only be processed later, such that a speed at which the server responds to other acquisition requests is reduced, and response efficiency is lowered.

However, in the embodiment shown in FIG. 4, when the numerous users send the acquisition requests for acquiring the activity information of the target activity account to the server simultaneously, because multiple pieces of activity information of the target activity account have been already pre-stored in multiple servers respectively at different locations, the multiple serves may share the acquisition requests sent by the numerous users. In this way, the number of the acquisition requests received by each server within the unit time period may be decreased, such that the number of the acquisition requests received by each server within the unit time period may be less than the number of acquisition requests that can be processed by the server within the unit time period. Therefore, each server may complete processing of all respectively received processing requests within the unit time period, such that the speed of responding to the acquisition requests sent by the numerous users is enhanced on the whole, and response efficiency is improved.

The selection module 15 includes:
a first acquisition unit configured to acquire a locally stored first correspondence between a server identifier, a database identifier, a database table identifier, an activity identifier, and server location information;
a second acquisition unit configured to acquire, from the first correspondence, records including server identifiers of all the servers that have not received the acquisition request;
a third acquisition unit configured to acquire records including the target activity identifier from the records including the server identifiers of all the servers that have not received the acquisition request;
a fourth acquisition unit configured to separately acquire server location information from each record including the target activity identifier;
a selection unit configured to select location information of the server nearest to the location information of the terminal from the acquired server location information;
a first determination unit configured to determine, from the first correspondence, a record including the location information of the server nearest to the location information of the terminal; and
a second determination unit configured to use a server corresponding to a server identifier in the record including the location information of the server nearest to the location information of the terminal as the server nearest to the terminal.

Further, the device further includes:
an establishment module configured to establish a target activity account, wherein the target activity account includes multiple pieces of activity information and a target activity identifier of the target activity account;
a second acquisition module configured to acquire multiple target servers for storing the multiple pieces of activity information, and acquire location information of each of the target servers;
an allocation module configured to allocate activity information to each of the target servers according to the quantity of the activity information of the target activity account and the number of the target servers; and
a first storage module configured to store, for each of the target servers, the activity information allocated to the target server into a target database table of a target database in the target server; and
a second storage module configured to store a target server identifier of the target server, a target database identifier of the target database, a target database table identifier of the target database table, the target activity identifier of the target activity account, and the location information of the target server into a locally stored first correspondence between a server identifier, a database identifier, a database table identifier, an activity identifier, and server location information.

The second acquisition module includes:
a fifth acquisition unit configured to acquire a locally stored second correspondence between a server identifier, a database identifier, and an identifier of a database table storing no information;
a sixth acquisition unit configured to acquire all server identifiers included in the second correspondence;
a deletion unit configured to perform a deletion operation on identical server identifiers in all the acquired server identifiers, and keeping only one of the identical server identifiers; and
a third determination unit configured to use all servers corresponding to the remaining server identifiers as the target servers.

The first storage module includes:
a seventh acquisition unit configured to acquire a target record including the target server from the second correspondence;
a fourth determination unit configured to use a database identifier in the target record as a target database identifier, and use a database table identifier in the target record as a target database table identifier; and
a storage unit configured to store the activity information allocated to the target server into a target database table of a target database in the target server, wherein the target database is a database corresponding to the target database identifier, and the target database table is a database table corresponding to the target database table identifier.

With respect to the device in the above embodiment, a specific manner for each module to perform the operation has been described in detail in the embodiment relating to the method, thus being not described in detail herein.

Those skilled in the art can easily conceive other implementation solutions of the present invention after considering the specification and practicing the invention disclosed herein. The present application is intended to cover any variations, usages, or adaptations of the present application. These variations, usages, or adaptations abide by general principles of the present invention, and include common knowledge or conventional technical means in the art not disclosed in the present invention. The specification and embodiments are regarded to be illustrative only, and the real scope and spirit of the present invention are indicated by the following claims.

It should be understood that the present invention is not limited to the precise structure described above and shown in the accompanying drawings, and various modifications and changes may be made without departing from the scope of the present invention. The scope of the present invention is limited only by the appended claims.

## Claims

1. An information processing method applied to a server, wherein the server is one server in a server group, each server in the server group is located at a different location and separately stores activity information of a target activity account; and the method comprises:
judging whether an acquisition request used for acquiring activity information of the target activity account and sent by a terminal is received, wherein the acquisition request carries location information of the terminal, a target activity identifier of the target activity account, and a target quantity of the activity information to be acquired;
judging, when the acquisition request is received, whether a quantity of locally stored activity information of the target activity account corresponding to the target activity identifier is greater than or equal to the target quantity of the activity information to be acquired by the acquisition request;
locally acquiring the target quantity of activity information when the quantity of the locally stored activity information is greater than or equal to the target quantity of the activity information to be acquired by the acquisition request, and sending the acquired target quantity of activity information to the terminal; and
selecting, according to the location information of the terminal, a server nearest to the terminal from servers in the server group that have not received the acquisition request when the quantity of the locally stored activity information is less than the target quantity of the activity information to be acquired by the acquisition request, and sending the acquisition request to the selected server, such that the selected server performs, according to the acquisition request, the step of judging whether a quantity of locally stored activity information of the target activity account is greater than or equal to the target quantity of the activity information to be acquired by the acquisition request.

2. The method of claim 1, wherein the step of selecting, according to the location information of the terminal, a server nearest to the terminal from servers in the server group that have not received the acquisition request comprises:
acquiring a locally stored first correspondence between a server identifier, a database identifier, a database table identifier, an activity identifier, and server location information;
acquiring, from the first correspondence, records comprising server identifiers of all the servers that have not received the acquisition request;
acquiring records comprising the target activity identifier from the records comprising server identifiers of all the servers that have not received the acquisition request;
separately acquiring server location information from each record comprising the target activity identifier;
selecting location information of the server nearest to the location information of the terminal from the acquired server location information;
determining, from the first correspondence, a record comprising the location information of the server nearest to the location information of the terminal; and
using a server corresponding to a server identifier in the record comprising the location information of the server nearest to the location information of the terminal as the server nearest to the terminal.

3. The method of claim 1, further comprising:
establishing a target activity account, wherein the target activity account comprises multiple pieces of activity information and a target activity identifier of the target activity account;
acquiring multiple target servers for storing the multiple pieces of activity information, and acquiring location information of each of the target servers;
allocating activity information to each of the target servers according to the quantity of the activity information of the target activity account and the number of the target servers; and
storing, for each of the target servers, the activity information allocated to the target server into a target database table of a target database of the target server; and storing a target server identifier of the target server, a target database identifier of the target database, a target database table identifier of the target database table, the target activity identifier of the target activity account, and the location information of the target server into a locally stored first correspondence between a server identifier, a database identifier, a database table identifier, an activity identifier, and server location information.

4. The method of claim 3, wherein the step of acquiring multiple target servers for storing the multiple pieces of activity information comprises:
acquiring a locally stored second correspondence between a server identifier, a database identifier, and an identifier of a database table storing no information;
acquiring all server identifiers comprised in the second correspondence;
performing a deletion operation on identical server identifiers in all the acquired server identifiers, and keeping only one of the identical server identifiers; and
using all servers corresponding to the remaining server identifiers as the target servers.

5. The method of claim 4, wherein the step of storing the activity information allocated to the target server into a target database table of a target database of the target server comprises:
acquiring a target record comprising the target server from the second correspondence;
using a database identifier in the target record as a target database identifier, and using a database table identifier in the target record as a target database table identifier; and
storing the activity information allocated to the target server into a target database table of a target database in the target server, wherein the target database is a database corresponding to the target database identifier, and the target database table is a database table corresponding to the target database table identifier.

6. An information processing device, comprising:
a first judging module configured to judge whether an acquisition request used for acquiring activity information of a target activity account and sent by a terminal is received, wherein the acquisition request carries location information of the terminal, a target activity identifier of the target activity account, and a target quantity of the activity information to be acquired;
a second judging module configured to judge, when the acquisition request is received, whether a quantity of locally stored activity information of the target activity account corresponding to the target activity identifier is greater than or equal to the target quantity of the activity information to be acquired by the acquisition request;
a first acquisition module configured to locally acquire the target quantity of activity information when the quantity of the locally stored activity information is greater than or equal to the target quantity of the activity information to be acquired by the acquisition request;
a first sending module configured to send the acquired target quantity of activity information to the terminal;
a selection module configured to select, according to the location information of the terminal, a server nearest to the terminal from servers in the server group that have not received the acquisition request when the quantity of the locally stored activity information is less than the target quantity of the activity information to be acquired by the acquisition request; and
a second sending module configured to send the acquisition request to the selected server, such that the selected server performs, according to the acquisition request, the step of judging whether a quantity of locally stored activity information of the target activity account is greater than or equal to the target quantity of the activity information to be acquired by the acquisition request.

7. The device of claim 6, wherein the selection module comprises:
a first acquisition unit configured to acquire a locally stored first correspondence between a server identifier, a database identifier, a database table identifier, an activity identifier, and server location information;
a second acquisition unit configured to acquire, from the first correspondence, records comprising server identifiers of all the servers that have not received the acquisition request;
a third acquisition unit configured to acquire records comprising the target activity identifier from the records comprising server identifiers of all the servers that have not received the acquisition request;
a fourth acquisition unit configured to separately acquire server location information from each record comprising the target activity identifier;
a selection unit configured to select location information of the server nearest to the location information of the terminal from the acquired server location information;
a first determination unit configured to determine, from the first correspondence, a record comprising the location information of the server nearest to the location information of the terminal; and
a second determination unit configured to use a server corresponding to a server identifier in the record comprising the location information of the server nearest to the location information of the terminal as the server nearest to the terminal.

8. The device of claim 6, further comprising:
an establishment module configured to establish a target activity account, wherein the target activity account comprises multiple pieces of activity information and a target activity identifier of the target activity account;
a second acquisition module configured to acquire multiple target servers for storing the multiple pieces of activity information, and acquire location information of each of the target servers;
an allocation module configured to allocate activity information to each of the target servers according to the quantity of the activity information of the target activity account and the number of the target servers;
a first storage module configured to store, for each of the target servers, the activity information allocated to the target server into a target database table of a target database of the target server; and
a second storage module configured to store a target server identifier of the target server, a target database identifier of the target database, a target database table identifier of the target database table, the target activity identifier of the target activity account, and the location information of the target server into a locally stored first correspondence between a server identifier, a database identifier, a database table identifier, an activity identifier, and server location information.

9. The device of claim 8, wherein the second acquisition module comprises:
a fifth acquisition unit configured to acquire a locally stored second correspondence between a server identifier, a database identifier, and an identifier of a database table storing no information;
a sixth acquisition unit configured to acquire all server identifiers comprised in the second correspondence;
a deletion unit configured to perform a deletion operation on identical server identifiers in all the acquired server identifiers, and keep only one of the identical server identifiers; and
a third determination unit configured to use all servers corresponding to the remaining server identifiers as the target servers.

10. The device of claim 9, wherein the first storage module comprises:
a seventh acquisition unit configured to acquire a target record comprising the target server from the second correspondence;
a fourth determination unit configured to use a database identifier in the target record as a target database identifier, and use a database table identifier in the target record as a target database table identifier; and
a storage unit configured to store the activity information allocated to the target server into a target database table of a target database in the target server, wherein the target database is a database corresponding to the target database identifier, and the target database table is a database table corresponding to the target database table identifier.
